# EUROPÄISCHE PATENTSCHRIFT

(11) **EP 2 291 632 B1**
(45) Veröffentlichungstag und Bekanntmachung des Hinweises auf die Patenterteilung: **02.11.2011**
(21) Anmeldenummer: 09753509.0
(22) Anmeldetag: 21.04.2009
(51) Int. Cl.: G01N 1/31, G01N 1/36

(54) **VORRICHTUNG ZUM ENTFERNEN VON ÜBERSCHÜSSIGEM EINBETTMEDIUM**
DEVICE FOR REMOVING EXCESS POTTING MEDIA
DISPOSITIF POUR ÉLIMINER LE MILIEU D'INCLUSION EXCÉDENTAIRE

(30) Priorität: 29.05.2008 DE 102008025787
(43) Veröffentlichungstag der Anmeldung: 09.03.2011
(73) Patentinhaber: pfm medical ag, 50966 Köln (DE)
(72) Erfinder: KRAUS, Steffen, 69 207 Sandhausen (DE); SCHNEIDER, Erwin, 69226 Nussloch (DE)
(74) Vertreter: Ullrich & Naumann
(86) Internationale Anmeldenummer: PCT/DE2009/000515
(87) Internationale Veröffentlichungsnummer: WO 2009/143793

(56) Entgegenhaltungen:
- WO-A2-02/23157
- GB-A- 1 232 276
- US-A- 4 623 308
- US-A- 5 968 436

## Beschreibung

Die Erfindung betrifft eine Vorrichtung zum Entfernen von überschüssigem Einbettmedium von der Oberfläche einer eingebetteten Probe, insbesondere zum Entfernen von Wachs von der Außenseite einer Gewebekassette, mit einem Gestell und einer vom Gestell mit Neigung gehaltenen beheizbaren Platte, wobei in der Oberfläche der Platte als Ablaufrinnen dienende Nuten, Rillen, Vertiefungen oder dgl. zur Aufnahme und Ableitung von abgeriebenem und geschmolzenem Einbettmedium ausgebildet sind, die in eine Sammelrinne münden.

Vorrichtungen der gattungsbildenden Art werden in der Pathologie bzw. Histologie verwendet, nämlich beim Präparieren von Geweben bzw. Gewebsproben für Untersuchungen. Insbesondere werden die Gewebsproben nach einer Behandlung in ein Einbettmedium eingebettet, vorzugsweise in einer sog. Gewebekassette. Durch diese Maßnahme lässt sich die Gewebsprobe handhaben. Zum Einbetten dient regelmäßig Wachs bzw. Paraffin, welches zu diesem Zwecke geschmolzen wird.

Zur anschließenden Untersuchung, bspw. im Rahmen der Fluoreszenzmikroskopie, ist es erforderlich, dass sich die Gewebsproben bzw. die die Gewebsprobe tragende Kassette einwandfrei und reproduzierbar platzieren bzw. justieren lässt. Befinden sich an der eingebetteten Probe bzw. an der Gewebekassette Paraffinreste, so ist eine Justage bzw. einwandfreie Positionierung der Gewebsprobe nicht möglich. Folglich ist es erforderlich, überschüssiges Einbettmedium vor der eigentlichen Untersuchung zu entfernen, um nämlich eine Fehlpositionierung der Gewebsprobe ausschließen zu können.

Aus der WO 2002/023157 A2 ist eine gattungsbildende Vorrichtung bekannt, mit der sich überschüssiges Einbettmedium von der Oberfläche einer eingebetteten Probe, insbesondere von der Außenseite einer Gewebekassette, entfernen lässt. Die bekannte Vorrichtung umfasst ein Gestell, von dem eine beheizbare Platte in geneigter bzw. schräger Position gehalten ist. Die Platte umfasst eine strukturierte Oberfläche, nämlich eine mit Nuten, Rillen, Vertiefungen oder dgl. ausgestattete Oberfläche, wonach mehrere parallel zueinander verlaufende Ablaufrinnen ausgebildet sind. Die Ablaufrinnen verlaufen schräg auf der Plattenoberfläche, nämlich in Richtung der durch Schrägstellung der Platte erzeugten Neigung nach untern, so dass abgestreiftes Wachs durch die Beheizung der Platte schmilzt und in den Ablaufrinnen - über Schwerkraft - zu einem Randbereich der Platte läuft. Dort befindet sich eine Sammelrinne, in die die Ablaufrinnen allesamt münden. Von dort aus kann das entfernte Wachs in eine entsprechend positionierte Schale abtropfen, die in der Vorrichtung jedoch nicht vorgesehen ist.

Die aus der WO 2002/023157 A2 bekannte Vorrichtung ist insoweit problematisch, als es stets erforderlich ist, das über die Ablaufrinnen und Sammelrinne ablaufende Wachs in einem separaten Behältnis zu sammeln. Dieses Behältnis ist stets relativ zu der Vorrichtung zu positionieren. Dies ist umständlich.

Außerdem kann das geschmolzene Wachs ausschließlich in eine Richtung, nämlich in Richtung der geneigten Rillen, ablaufen, so dass gerade beim Entfernen großer Mengen Wachs oder bei gleichzeitiger Behandlung mehrerer Gewebsproben ein Überfüllen der Ablaufrinnen bzw. ein Rückstau und somit Überlauf stattfinden kann. Werden dabei weiterhin Gewebeproben bearbeitet, wird das überschüssige Wachs regelrecht auf der Oberfläche der Platte verschmiert und lässt sich allenfalls stark zeitverzögert abführen. Der Bearbeitungsprozess ist dadurch jedenfalls behindert.

Des Weiteren ist bei der gattungsbildenden Vorrichtung nachteilig, dass die Ablaufrinnen in eine Richtung abgeschrägt verlaufen, so dass das Abschaben der eingebetteten Probe bzw. der Gewebekassette nur in eine Richtung, nämlich quer zu den Ablaufrinnen, erfolgen kann. Folglich ist die bekannte Vorrichtung immer nur für Rechtshänder oder Linkshänder geeignet, lässt sich jedenfalls nicht in beide Bewegungsrichtungen zum Bewegen der Probe bzw. Gewebekassette nutzen.

Der vorliegenden Erfindung liegt nun die Aufgabe zugrunde, eine Vorrichtung der gattungsbildenden Art derart auszugestalten und weiterzubilden, dass sich bei hinreichender Betriebssicherheit mühelos auch größere Mengen an überschüssigem Einbettmedium abführen lassen, ohne dabei ein umständliches Positionieren von Auffangbehältnissen vornehmen zu müssen.

Die voranstehende Aufgabe wird erfindungsgemäß durch eine Vorrichtung mit den Merkmalen des Patentanspruchs 1 gelöst. Danach ist die gattungsbildende Vorrichtung **dadurch gekennzeichnet, dass** die Ablaufrinnen von einem jeweils höchsten Punkt beidseitig nach außen abfallend in Sammelrinnen münden, die zu einem Auffangbehältnis führen.

Erfindungsgemäß ist erkannt worden, dass sich die Vorrichtung zur abschabenden Bewegung der Probe bzw. Gewebekassetten in unterschiedlichen Richtungen verwenden lässt, wenn nämlich die Nuten von einem jeweils höchsten Punkt beidseitig nach außen abfallend ausgeführt sind. Folglich sind die Nuten, ausgehend von einer gedachten Mitteillinie, jeweils nach links und nach rechts abfallend ausgeführt, so dass die Probe bzw. Gewebekassette unter unterschiedlichen Winkeln schräg zur Nut geführt werden kann. Folglich eignet sich die Vorrichtung sowohl für Rechtshänder als auch für Linkshänder, nämlich zur Bewegung der Probe in zwei unterschiedlichen Richtungen.

Des Weiteren ist von ganz besonderem Vorteil, dass die Nuten beidseitig nach außen abfallend in Sammelrinnen münden, nämlich in Sammelrinnen, die beidseitig der Nuten angeordnet sind bzw. diese umlaufen. Die Sammelrinnen führen wiederum zu einem Auffangbehältnis, welches der Vorrichtung zugeordnet ist. Somit ist gewährleistet, dass sich abgeschabtes und geschmolzenes Einbettmedium über die Ablaufrinnen in die Sammelrinne hinein sammeln und von dort aus in das Auffangbehältnis laufen bzw. abtropfen. Besondere Maßnahmen zum Auffangen des abgeschabten und geschmolzenen Einbettmediums sind nicht erforderlich.

Die Ablaufrinnen sind in vorteilhafter Weise symmetrisch mit beidseitig gleich langen Ablaufarmen ausgebildet, wobei ebenso eine asymmetrische Ausgestaltung mit beidseitig unterschiedlich langen Ablaufarmen möglich ist. Eine symmetrische Ausgestaltung hat den Vorteil, dass die eingebettete Probe bzw. Gewebekassette aus zwei Richtungen mit hinreichend guter Wirkung vom Einbettmedium befreit werden kann, da nämlich die Anordnung der Ablaufrinnen im Wesentlichen zwei Bewegungsrichtungen zum Abstreifen des Einbettmediums zulässt.

Des Weiteren ist es von Vorteil, wenn über die Länge der Platte hinweg mehrere Ablaufrinnen untereinander angeordnet sind, so dass ein mehrfaches Abstreifen möglich ist. Außerdem hat die Anordnung mehrerer Ablaufrinnen den Vorteil, dass gleichzeitig mehrere Proben bzw. Gewebekassetten über die Platte bewegt werden können.

Die Ablaufrinnen können parallel zueinander verlaufen. Ebenso ist es denkbar, dass die Ablaufrinnen fächerartig divergieren bzw. konvergieren. Eine solche Anordnung hätte den Vorteil, dass kleine Proben im Bereich der eng beieinander liegenden Ablaufrinnen und größere Proben im Bereich der weiter auseinander liegenden Ablaufrinnen abgestreift werden können.

Wie bereits zuvor ausgeführt, münden die Ablaufrinnen beidseitig in jeweils eine Sammelrinne und bilden somit gemeinsam mit den Sammelrinnen ein kommunizierendes Rinnensystem. Dadurch ist gewährleistet, dass das abgestreifte Einbettmedium, welches im geschmolzenen Zustand entlang der Ablaufrinnen läuft, über die Sammelrinnen in das Auffangbehältnis gelangt. Dabei ist zu gewährleisten, dass die Platte Ober das gesamte Rinnensystem hinweg eine mehr oder weniger gleichmäßige Temperatur aufweist, bei der das Einbettmedium hinreichend dünnflüssig ist, um sich entlang des Gefälles durch das Rinnensystem hindurch zu bewegen.

In ganz besonders vorteilhafter Weise münden die Sammelrinnen nahe des tiefsten Punktes der Platte oder direkt an einem tiefsten Punkt der Platte in einen Abtropfbereich, der sich oberhalb des Auffangbehältnisses befindet. Der Abtropfbereich umfasst eine Ausnehmung in der Platte in die die Sammelrinnen münden bzw. in die sich die Sammelrinnen öffnen. Der Abtropfbereich kann eine nach unten gerichtete Abtropfnase oder dgl. umfassen, damit nämlich das Einbettmedium gezielt in das sich darunter befindliche Auffangbehältnis geleitet wird.

In Bezug auf die Ablaufrinnen sei angemerkt, dass diese einerseits zum Abstreifen des überschüssigen Einbettmediums und andererseits zum Ablauf des abgestreiften und geschmolzenen Einbettmediums dienen. Dabei ist es von Vorteil, wenn die Ränder der Ablaufrinnen scharfkantig ausgebildet sind, so dass sich das überschüssige Einbettmedium wirkungsvoll abstreifen lässt.

Der Boden bzw. Nutengrund der Ablaufrinnen und ggf. der Sammelrinnen ist vorzugsweise abgerundet, um nämlich den Ablauf des geschmolzenen Einbettmediums zu begünstigen. Jedenfalls sollten das Einbettmedium im Fluss behindernde Kapillarwirkungen in Eckbereichen des Rinnensystems vermieden sein.

Auch ist es denkbar, dass die Flächen zwischen den Ablaufrinnen, nämlich die zwischen den Ablaufrinnen befindlichen Oberflächen der Platte, zumindest geringfügig zueinander geneigt sind, so dass stets die eine Kante der Ablaufrinne gegenüber der anderen Kante erhaben ist. Bei entsprechend scharfkantiger Ausgestaltung wird durch diese Maßnahme der abrasive Effekt bzw. das Abstreifen an der jeweils erhabenen Kante begünstigt.

Zuvor ist ebenfalls bereits ausgeführt worden, dass die Platte beheizt ist. Dabei ist wesentlich, dass die Plattentemperatur gehalten wird, bei der das Einbettmedium, bspw. Wachs bzw. Paraffin, relativ dünnflüssig im Rinnensystem entlang des Gefälles laufen kann. Temperaturen im Bereich zwischen 50°C und 60°C sind dabei an der Oberfläche der Platte zu realisieren. In vorteilhafter Weise ist dazu dem Gestell eine elektrische Heizeinrichtung mit mindestens einem Heizelement zugeordnet. Das Heizelement kann unmittelbar der Platte, vorzugsweise auf deren Unterseite, zugeordnet sein.

Grundsätzlich ist es denkbar, dass das Heizelement in die Platte integriert bzw. als Platte ausgeführt ist. Mit anderen Worten könnte das Heizelement im Sinne einer Heizplatte ausgeführt sein und somit die Platte selbst darstellen oder unterhalb der Platte mit dieser fest verbunden sein. Eine klebetechnische Verbindung einer Heizplatte mit der eigentlichen Platte ist denkbar.

Wesentlich ist jedenfalls, dass zwischen einer etwaigen Heizplatte bzw. Heizleitern und der Platte ein hinreichend guter Wärmeübergang realisiert ist.

In Bezug auf die Platte ist es von Vorteil, wenn sich diese aus dem Gestell entfernen lässt, nämlich einerseits zum Zwecke der Reinigung und andererseits zum Austausch gegen eine andere Platte. Entsprechend ist es von Vorteil, wenn die Platte in das Gestell eingelegt oder eingesteckt ist. Jedenfalls sollte die Platte lösbar mit dem Gestell verbunden sein. Im Falle einer ferromagnetischen Ausgestaltung der Platte ist es denkbar, dass die Platte über Magnetkräfte mit dem Gestell verbunden ist. Eine solche Verbindung ist bspw. auch dadurch möglich, dass der Platte im Randbereich ein Magnetstreifen zugeordnet ist.

Das der Platte zugeordnete Heizelement ist elektrisch zu kontaktieren. Dazu könnte zum Festlegen der Platte mindestens eine Steckverbindung vorgesehen sein, die einen elektrischen Anschluss für die Heizeinrichtung umfasst. Damit könnte das mechanische und elektrische Ankoppeln der Platte durch die gleiche Maßnahme realisiert sein.

In weiter vorteilhafter Weise umfasst die Heizeinrichtung eine Steuerung oder Regelung für die Temperatur der Platte. Dabei sollte gewährleistet sein, dass die Platte auf einer konstanten Außentemperatur haltbar ist, um nämlich auch über eine längere Zeit hinweg einen sicheren Betrieb der Vorrichtung gewährleisten zu können. Auch ist es von Vorteil, wenn vorgebbare Temperaturen voreinstellbar bzw. wählbar sind. Die Platte ist in vorteilhafter Weise aus Metall gefertigt. Es bietet sich an, die Platte aus Aluminium oder aus einer Aluminiumlegierung zu fertigen. Eine spritzguss/druckgusstechnische Herstellung ist möglich. Auch ist es denkbar, die Platte aus dem Vollen zu arbeiten.

In weiter vorteilhafter Weise sind mindestens zwei Platten mit unterschiedlicher Oberflächenstruktur zum Austausch vorgesehen, so dass es möglich ist, die Vorrichtung auf den konkreten Bedarf abzustimmen, nämlich durch Bereitstellung unterschiedlicher Oberflächenstrukturen.

Das Auffangbehältnis befindet sich unterhalb des tiefsten Punktes der Platte und erstreckt sich in vorteilhafter Weise zumindest geringfügig in das Gestell hinein. Dabei könnte das Auffangbehältnis als komplett herausziehbare Schublade ausgeführt sein, so dass eine isolierte Reinigung der Schublade möglich ist.

In Bezug auf die erforderliche Schrägstellung der Platte ist es vorteilhaft, wenn das Gestell keilförmig ausgebildet ist, so dass sich das Rinnensystem entsprechend der Neigung des Gestells ganz besonders zum Ablauf des geschmolzenen Einbettmediums eignet.

Im Konkreten ist es von Vorteil, wenn das Gestell als Gehäuse mit einer vorderseitigen Öffnung zum Einschieben des Auffangbehältnisses ausgeführt ist. Das Auffangbehältnis kann aus Kunststoff, aber auch aus dem gleichen Material wie die Platte ausgeführt sein. Das Gehäuse ist in weiter vorteilhafter Weise ebenfalls aus Aluminium bzw. einer Aluminiumlegierung gefertigt. Die Platte kann als Abdeckung des Gehäuses dienen, so dass diese das Gehäuse nach oben abschließt. Innerhalb des Gehäuses befindet sich die erforderliche Elektrik/Elektronik, insbesondere die Heizeinrichtung und deren Steuerung/Regelung.

Von der Unterseite her ist das Gehäuse ebenfalls geschlossen, nämlich durch eine von unterhalb angeschraubte Bodenplatte. Mit der Verschraubung können bspw. vier Gummipuffer als rutschsichere Stellfüße vorgesehen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnungen zu verweisen. In Verbindung mit der Erläuterung des bevorzugten Ausführungsbeispiels der Erfindung anhand der Zeichnungen werden auch im Allgemeinen bevorzugte Ausgestaltungen und Weiterbildungen der Lehre erläutert. In den Zeichnungen zeigt
- Fig. 1: in einer schematischen Ansicht ein Ausführungsbeispiel einer erfindungsgemäßen Vorrichtung, schräg von vorne,
- Fig. 2: in einer schematischen Ansicht den Gegenstand aus Fig. 1, schräg von hinten,
- Fig. 3: in einer schematischen Ansicht den Gegenstand aus den Fig. 1 und , von vorne und
- Fig. 4: in einer Sprengdarstellung einzelne Bestandteile der Vorrichtung nach den Fig. 1 bis 3.

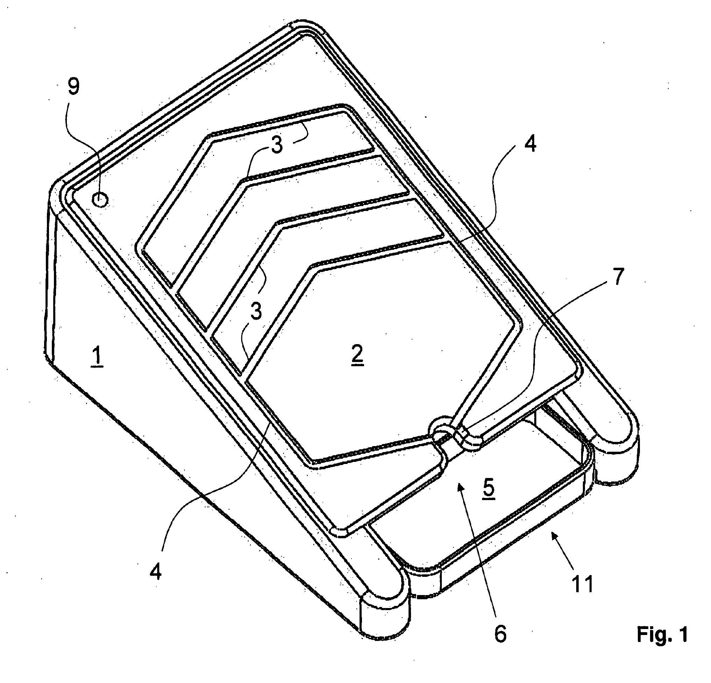

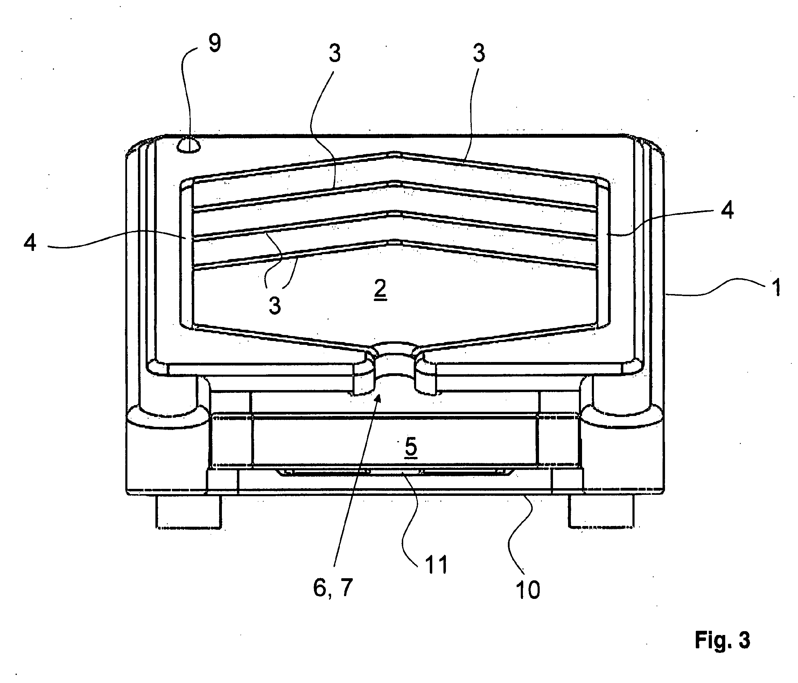

Die Fig. 1 bis 4 zeigen ein Ausführungsbeispiel einer erfindungsgemäßen Vorrichtung zum Entfernen von überschüssigem Einbettmedium von der Oberfläche einer eingebetteten Probe, wobei es sich bei dem Einbettmedium regelmäßig um Wachs bzw. Paraffin handelt. Üblicherweise geht es darum, das überschüssige Paraffin von der Außenseite einer Gewebekassette zu entfernen, in die eine Gewebsprobe eingebettet ist.

Die Vorrichtung umfasst ein als Gehäuse ausgeführtes Gestell 1 und eine vom Gestell 1 mit Neigung gehaltene Platte 2. Die Platte 2 ist von der Unterseite her beheizt. Sie dient einerseits zum Abstreifen des überschüssigen Einbettmediums und andererseits zum Verflüssigen des Mediums, so dass es über die Platte abgeführt werden kann. Im Konkreten sind in der Oberfläche der Platte 2 Ablaufrinnen 3 in Form von Nuten ausgebildet, die zur Aufnahme und Ableitung des abgeriebenen und geschmolzenen Einbettmediums dienen. Die Ablaufrinnen 3 münden in seitlichen Sammelrinnen 4.

Erfindungsgemäß sind die Ablaufrinnen 3 derart ausgebildet, dass sie von einem jeweils höchsten Punkt beidseitig nach außen abfallend in die Sammelrinnen 4 münden. Entsprechend sind die Ablaufrinnen 3 V-förmig, nach unten abfallend, ausgeführt, wobei die Sammelrinnen 4 zu einem Auffangbehältnis 5 führen.

Bei dem in den Figuren gezeigten Ausführungsbeispiel sind die Ablaufrinnen 3 symmetrisch mit beidseitig gleich langen Ablaufarmen ausgebildet. Außerdem befinden sich untereinander vier identische Ablaufrinnen 3, die einen identischen Abstand zueinander haben und parallel zueinander verlaufen. Gemeinsam mit den seitlichen Sammelrinnen 4 bilden die Ablaufrinnen 3 ein kommunizierendes Rinnensystem, welches einerseits zum Abreiben des überschüssigen Einbettmediums und andererseits zum Verflüssigen und Abführen des abgestreiften Einbettmediums dienen.

Die Fig. lassen des Weiteren erkennen, dass die Sammelrinnen 4 nahe eines tiefsten Punktes der Platte 2 in einen Abtropfbereich 6 oberhalb des Auffangbehältnisses 5 münden. Im Konkreten umfasst der Abtropfbereich 6 eine Ausnehmung 7 in der Platte 2, in die die Sammelrinnen 4 münden.

Die Ränder der Ablaufrinnen 3 sind zur Begünstigung des Abstreifens scharfkantig ausgebildet. Der jeweilige Nutengrund ist abgerundet, so dass der Ablauf des flüssigen Paraffins gewährleistet ist.

Die Platte 2 ist elektrisch beheizt. Im Konkreten befindet sich auf der Unterseite der Platte 2 eine Heizplatte, die Bestandteil einer integrierten Heizeinrichtung ist.

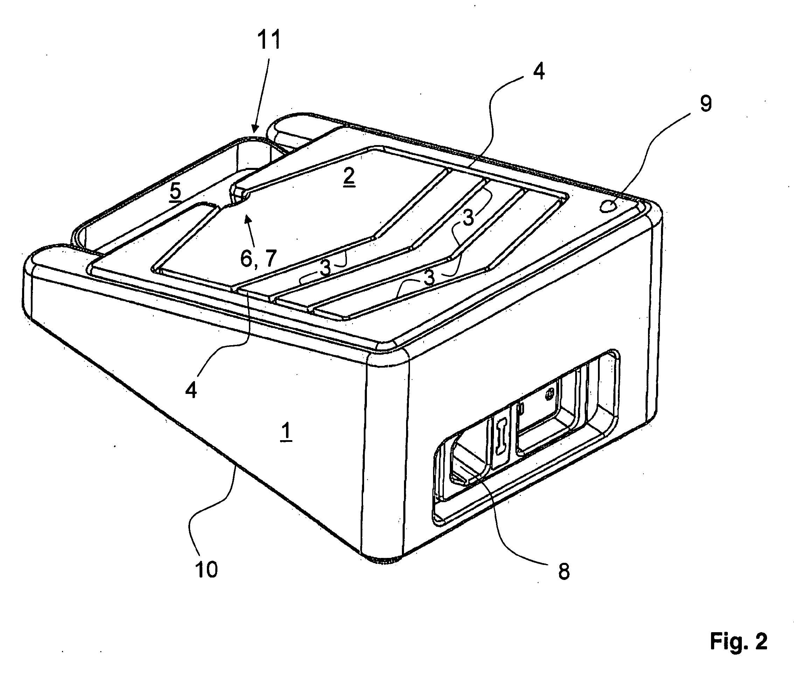

Fig. 2 zeigt den elektrischen Anschluss 8 für die Heizeinrichtung, wobei dort ein in den Fig. nicht gezeigter Gerätestecker einsteckbar ist, eine Kontrollleuchte 9 zeigt an, ob die Vorrichtung eingeschaltet ist. Über entsprechende Dioden ist es möglich, den Betriebszustand anzuzeigen, bspw. mit einer Farbe den grundsätzlich eingeschalteten Zustand und mit einer anderen Farbe das Erreichen der Betriebstemperatur. Die Vorkehrung mehrerer Kontrollleuchten 9 ist denkbar.

In den Fig. ist des Weiteren angedeutet, dass die Platte 2 in das als Gehäuse ausgeführte Gestell 1 eingelegt bzw. eingesetzt ist und dort arretiert ist. Bspw ist es möglich, die Platte 2 von unten her fest mit dem Gestell 1 zu verschrauben.

Die Fig. zeigen des Weiteren deutlich das Auffangbehältnis 5, welches als Schublade ausgeführt und in einen unteren Bereich des Gestells 1 bzw, des Gehäuses eingeschoben ist. Das Auffangbehältnis 5 befindet sich unmittelbar unterhalb des Abtropfbereichs 6 bzw. der den Abtropfbereich 6 bildenden Ausnehmung 7, so dass das über Schwerkraft im Rinnensystem fließende Einbettmittel in das Auffangbehältnis 5 abtropfen kann. Ein einfaches Herausziehen bzw. Entfernen und Reinigen des Auffangbehältnisses 5 ist aufgrund der gewählten Ausführung als Schublade gewährleistet.

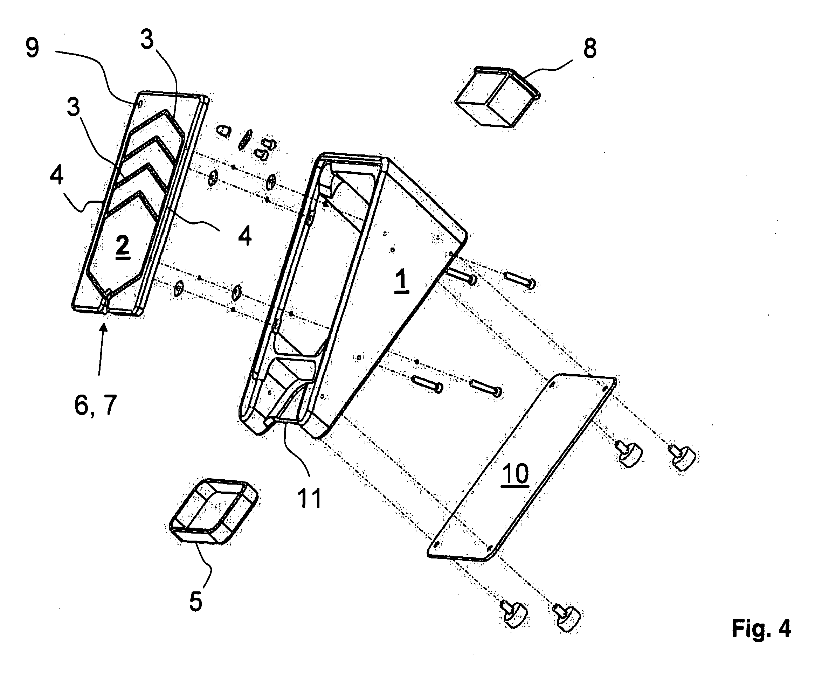

Sowohl die Platte 2 als auch das Gestell 1 bzw. das Gehäuse können aus Aluminium angefertigt sein. Das Gestell 1 kann dabei einteilig ausgeführt sein, wobei die Platte 2 das Gestell 1 bzw. Gehäuse von oben und eine lediglich in Fig. 4 gezeigte Bodenplatte 10 das Gestell 1 bzw. Gehäuse von unten abschließen. Das zur Aufnahme des Auffangbehältnisses 5 dienende Fach ist entsprechend den Maßen des Auffangbehältnisses 5 nach innen begrenzt, so dass der Innenraum des Gestells 1 bzw. Gehäuses komplett abgeschlossen ist.

In Bezug auf Merkmale, die sich den Fig. nicht entnehmen lassen, sei zur Vermeidung von Wiederholungen auf den allgemeinen Teil der Beschreibung verwiesen.

Schließlich sei angemerkt, dass das voranstehend erörterte Ausführungsbeispiel lediglich der beispielhaften Erläuterung der erfindungsgemäßen Vorrichtung dient, diese jedoch nicht auf das Ausführungsbeispiel einschränkt.

## Patentansprüche

1. Vorrichtung zum Entfernen von überschüssigem Einbettmedium von der Oberfläche einer eingebetteten Probe, insbesondere zum Entfernen von Wachs von der Außenseite einer Gewebekassette, mit einem Gestell (1) und einer vom Gestell (1) mit Neigung gehaltenen beheizbaren Platte (2), wobei in der Oberfläche der Platte (2) als Ablaufrinnen (3) dienende Nuten, Rillen, Vertiefungen oder dgl. zur Aufnahme und Ableitung von abgeriebenem und geschmolzenem Einbettmedium ausgebildet sind, die in eine Sammelrinne (4) münden,
**dadurch gekennzeichnet, dass** die Ablaufrinnen (3) von einem jeweils höchsten Punkt beidseitig nach außen abfallend in Sammelrinnen (4) münden, die zu einem Auffangbehältnis (5) führen.

2. Vorrichtung nach Anspruch 1, **dadurch gekennzeichnet, dass** die Ablaufrinnen (3) symmetrisch mit beidseitig gleichlangen Ablaufarmen
oder asymmetrisch mit beidseitig unterschiedlich langen Ablaufarmen ausgebildet sind.

3. Vorrichtung nach Anspruch 1 oder 2, **dadurch gekennzeichnet, dass** Ober die Länge der Platte (2) hinweg mehrere Ablaufrinnen (3) untereinander angeordnet sind
oder dass die Ablaufrinnen (3) parallel zueinander verlaufen,
wobei die Ablaufrinnen (3) gemeinsam mit den Sammelrinnen (4) ein kommunizierendes Rinnensystem bilden können.

4. Vorrichtung nach einem der Ansprüche 1 bis 3, **dadurch gekennzeichnet, dass** die Sammelrinnen (4) nahe oder an einem tiefsten Punkt der Platte (2) in einen Abtropfbereich (6) oberhalb des Auffangbehältnisses (5) münden,
wobei der Abtropfbereich (6) eine Ausnehmung (7) in der Platte (2) umfassen kann, in die die Sammelrinnen (4) münden.

5. Vorrichtung nach einem der Ansprüche 1 bis 4, **dadurch gekennzeichnet, dass** die Ränder der Ablaufrinnen (3) scharfkantig ausgebildet sind
und/oder dass der Nutengrund der Ablaufrinnen (3) und ggf. der Sammelrinnen (4) abgerundet ist,
wobei die Flächen zwischen den Ablaufrinnen (3) zueinander zumindest geringfügig geneigt sein können.

6. Vorrichtung nach einem der Ansprüche 1 bis 5, **dadurch gekennzeichnet, dass** dem Gestell (1) eine elektrische Heizeinrichtung mit mindestens einem Heizelement zugeordnet ist,
wobei das Heizelement unmittelbar der Platte (2), vorzugsweise auf deren Unterseite, zugeordnet ist oder das Heizelement als Heizplatte ausgeführt ist oder das Heizelement in die Platte (2) integriert bzw. als Platte (2) ausgeführt ist.

7. Vorrichtung nach einem der Ansprüche 1 bis 6, **dadurch gekennzeichnet, dass** die Platte (2) in das Gestell (1) eingelegt oder eingesteckt ist
oder dass die Platte (2) mit dem Gestell (1) lösbar verbunden ist, wobei die Platte (2) über Magnetkräfte mit dem Gestell (1) verbunden sein kann.

8. Vorrichtung nach Anspruch 7 oder 8, **dadurch gekennzeichnet, dass** zum Festlegen der Platte (2) mindestens eine Steckverbindung vorgesehen ist, die einen elektrischen Anschluss (8) für die Heizeinrichtung umfasst,
wobei die Heizeinrichtung eine Steuerung oder Regelung für die Temperatur der Platte (2) umfassen kann.

9. Vorrichtung nach einem der Ansprüche 1 bis 8, **dadurch gekennzeichnet, dass** die Platte (2) aus Metall gefertigt ist,
wobei die Platte (2) aus Aluminium oder aus einer Aluminiumlegierung gefertigt sein kann.

10. Vorrichtung nach einem der Ansprüche 1 bis 9, **dadurch gekennzeichnet, dass** mindestens zwei Platten (2) mit unterschiedlicher Oberflächenstruktur zum Austausch vorgesehen sind.

11. Vorrichtung nach einem der Ansprüche 1 bis 10, **dadurch gekennzeichnet, dass** sich das Auffangbehältnis (5) unter der Platte (2) in das Gestell (1) hinein erstreckt,
wobei das Auffangbehältnis (5) als komplett herausziehbare Schublade ausgeführt sein kann.

12. Vorrichtung nach einem der Ansprüche 1 bis 11, **dadurch gekennzeichnet, dass** das Gestell (1) keilförmig ausgebildet ist.

13. Vorrichtung nach einem der Ansprüche 1 bis 12, **dadurch gekennzeichnet, dass** das Gestell (1) als Gehäuse mit einer vorderseitigen Öffnung für das Auffangbehältnis (5) ausgeführt ist.

14. Vorrichtung nach einem der Ansprüche 1 bis 13, **dadurch gekennzeichnet, dass** die Platte (2) als Abdeckung des Gehäuses dient.

15. Vorrichtung nach einem der Ansprüche 1 bis 14, **dadurch gekennzeichnet, dass** das Gehäuse von der Unterseite her durch eine Bodenplatte (10) geschlossen ist.

## Claims

1. Device for removing excess embedding medium from the surface of an embedded sample, in particular for removing wax from the outer side of a fabric cartridge, having a frame (1) and a plate (2) which can be heated and which is retained in an inclined manner by the frame (1), there being formed in the surface of the plate (2) grooves, channels, recesses or the like which act as discharge channels (3) and which are for receiving and discharging rubbed-away and molten embedding medium and which open in a collection channel (4), **characterised in that** the discharge channels (3) open outwards from a highest point at both sides in a downward direction into collection channels (4), which lead to a collection container (5).

2. Device according to claim 1, **characterised in that** the discharge channels (3) are constructed symmetrically with discharge arms which have the same length at both sides or asymmetrically with discharge arms which have different lengths at both sides.

3. Device according to claim 1 or claim 2, **characterised in that** a plurality of discharge channels (3) are arranged one below the other over the length of the plate (2) or **in that** the discharge channels (3) extend parallel with each other, the discharge channels (3) being able to form a communicating channel system together with the collection channels (4).

4. Device according to any one of claims 1 to 3, **characterised in that** the collection channels (4), close to or at a lowest point of the plate (2), open into a drainage region (6) above the collection container (5),
the drainage region (6) being able to comprise in the plate (2) a recess (7) in which the collection channels (4) open.

5. Device according to any one of claims 1 to 4, **characterised in that** the edges of the discharge channels (3) are constructed with sharp edges,
and/or **in that** the groove base of the discharge channels (3) and optionally the collection channels (4) is rounded,
the surfaces between the discharge channels (3) being able to be at least slightly inclined relative to each other.

6. Device according to any one of claims 1 to 5, **characterised in that** an electrical heating device having at least one heating element is associated with the frame (1), the heating element being directly associated with the plate (2), preferably at the lower side thereof, or the heating element being constructed as a heating plate or the heating element being integrated in the plate (2) or being constructed as a plate (2).

7. Device according to any one of claims 1 to 6, **characterised in that** the plate (2) is fitted or inserted in the frame (1)
or **in that** the plate (2) is releasably connected to the frame (1), the plate (2) being able to be connected to the frame (1) by means of magnetic forces.

8. Device according to claim 7 or claim 8, **characterised in that** there is provided for securing the plate (2) at least one plug type connection which comprises an electrical connection (8) for the heating device,
the heating device being able to comprise a control or regulation system for the temperature of the plate (2).

9. Device according to any one of claims 1 to 8, **characterised in that** the plate (2) is produced from metal, the plate (2) being able to be produced from aluminium or from an aluminium alloy.

10. Device according to any one of claims 1 to 9, **characterised in that** there are provided at least two plates (2) having a different surface structure in order to be exchanged.

11. Device according to any one of claims 1 to 10, **characterised in that** the collection container (5) extends below the plate (2) into the frame (1),
the collection container (5) being able to be constructed as a drawer which can be completely pulled out.

12. Device according to any one of claims 1 to 11, **characterised in that** the frame (1) is constructed in a wedge-like manner.

13. Device according to any one of claims 1 to 12, **characterised in that** the frame (1) is constructed as a housing having a front-side opening for the collection container (5).

14. Device according to any one of claims 1 to 13, **characterised in that** the plate (2) acts as a covering for the housing.

15. Device according to any one of claims 1 to 14, **characterised in that** the housing is closed from the lower side by means of a base plate (10).

## Revendications

1. Dispositif destiné à éliminer le produit d'enrobage excédentaire sur la surface d'un échantillon enrobé, en particulier éliminer la cire sur la face extérieure d'une cassette biologique, comportant un cadre (1) et une plaque (2) apte à être chauffée, maintenue de manière inclinée par le cadre (1), la surface de la plaque (2) étant munie de rainures, gorges, creux ou similaires formant des conduits d'écoulement (3), qui sont destinés à recevoir et à évacuer le produit d'enrobage fondu et éliminé par frottement et qui débouchent dans un conduit collecteur (4),
**caractérisé en ce que** les conduits d'écoulement (3) partent chacun d'un point le plus élevé, de part et d'autre de celui-ci en pente descendante vers l'extérieur pour déboucher dans des conduits collecteurs (4) qui mènent vers un casier de réception (5).

2. Dispositif selon la revendication 1, **caractérisé en ce que** les conduits d'écoulement (3) sont réalisés symétriquement avec des bras d'écoulement de même longueur sur les deux côtés, ou asymétriquement avec des bras d'écoulement de longueur différente sur les deux côtés.

3. Dispositif selon la revendication 1 ou 2, **caractérisé en ce que** plusieurs conduits d'écoulement (3) sont disposés les uns au-dessous des autres sur la longueur de la plaque (2), ou **en ce que** les conduits d'écoulement (3) sont parallèles entre eux, lesdits conduits d'écoulement (3) pouvant former, conjointement avec les conduits collecteurs (4), un système de conduits communiquant.

4. Dispositif selon l'une quelconque des revendications 1 à 3, **caractérisé en ce que** les conduits collecteurs (4) débouchent à proximité ou au niveau d'un point le plus bas de la plaque (2), dans une zone d'égouttage (6) au-dessus du casier de réception (5), ladite zone d'égouttage (6) pouvant être munie d'un évidement (7), ménagé dans la plaque (2), dans lequel débouchent les conduits collecteurs (4).

5. Dispositif selon l'une quelconque des revendications 1 à 4, **caractérisé en ce que** les bords des conduits d'écoulement (3) sont réalisés à arêtes vives, et/ou **en ce que** le fond des conduits d'écoulement (3) et, le cas échéant, des conduits collecteurs (4) est arrondi, les surfaces entre les conduits d'écoulement (3) pouvant être au moins légèrement inclinées l'une vers l'autre.

6. Dispositif selon l'une quelconque des revendications 1 à 5, **caractérisé en ce qu'**un dispositif de chauffage électrique comportant au moins un élément chauffant est associé au cadre (1), ledit élément chauffant étant associé directement à la plaque (2), de préférence sur la face inférieure de celle-ci, ou l'élément chauffant étant réalisé sous forme de plaque chauffante, ou l'élément chauffant étant intégré dans la plaque (2) ou étant réalisé sous la forme de la plaque (2).

7. Dispositif selon l'une quelconque des revendications 1 à 6, **caractérisé en ce que** la plaque (2) est insérée ou enfichée dans le cadre (1), ou **en ce que** la plaque (2) est assemblée de manière amovible au cadre (1), la plaque (2) pouvant être reliée au cadre (1) par l'intermédiaire de forces magnétiques.

8. Dispositif selon la revendication 7 ou 8, **caractérisé en ce que** pour la fixation de la plaque (2), il est prévu au moins une fiche de raccordement, qui comprend un raccord électrique (8) pour le dispositif de chauffage, ledit dispositif de chauffage pouvant comporter une commande ou un réglage pour la température de la plaque (2).

9. Dispositif selon l'une quelconque des revendications 1 à 8, **caractérisé en ce que** la plaque (2) est réalisée en métal, la plaque (2) pouvant être réalisée en aluminium ou dans un alliage d'aluminium.

10. Dispositif selon l'une quelconque des revendications 1 à 9, **caractérisé en ce qu'**il est prévu au moins deux plaques (2) avec une structure superficielle différente, destinées à être échangées entre elles.

11. Dispositif selon l'une quelconque des revendications 1 à 10, **caractérisé en ce que** le casier de réception (5) s'étend vers l'intérieur du cadre (1) en dessous de la plaque (2), ledit casier de réception (5) pouvant être réalisé sous la forme d'un tiroir intégralement extractible.

12. Dispositif selon l'une quelconque des revendications 1 à 11, **caractérisé en ce que** le cadre (1) est réalisé en forme de clavette.

13. Dispositif selon l'une quelconque des revendications 1 à 12, **caractérisé en ce que** le cadre (1) est réalisé sous forme de boîtier avec une ouverture à l'avant pour le casier de réception (5).

14. Dispositif selon l'une quelconque des revendications 1 à 13, **caractérisé en ce que** la plaque (2) est destinée à former un couvercle pour le boîtier.

15. Dispositif selon l'une quelconque des revendications 1 à 14, **caractérisé en ce que** le boîtier est fermé, depuis le côté inférieur, par une plaque de fond (10).
